**Europäisches Patentamt**

**European Patent Office**

**Office européen des brevets**

(19)

(11) Veröffentlichungsnummer : **0 377 096 B1**

(12) **EUROPÄISCHE PATENTSCHRIFT**

(45) Veröffentlichungstag der Patentschrift :
**22.07.92 Patentblatt 92/30**

(51) Int. Cl.⁵ : **B60B 25/22**

(21) Anmeldenummer : **89120155.0**

(22) Anmeldetag : **31.10.89**

(54) **Mehrteilige verschraubte Stahlfelge.**

(30) Priorität : **30.12.88 DE 3844331**

(43) Veröffentlichungstag der Anmeldung :
**11.07.90 Patentblatt 90/28**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**FR-A- 410 956**
**GB-A- 217 102**
**US-A- 1 535 196**
**US-A- 1 579 328**
**US-A- 1 954 757**

(73) Patentinhaber : **MTI METALLTECHNIK
INTERNATIONAL GMBH
Industriestrasse 5
W-6701 Maxdorf (DE)**

(72) Erfinder : **Thoni, Ludwig
Hermann-Löns-Strasse 21
W-6701 Birkenheide (DE)**

(74) Vertreter : **Patentanwälte Zellentin & Partner
Rubensstrasse 30
W-6700 Ludwigshafen (DE)**

EP 0 377 096 B1

## Beschreibung

Die vorliegende Erfindung betrifft mehrteilige Stahlfelgen, bestehend aus einem Mittelteil aus Leichtmetall oder Stahl, sowie mit diesem verschraubten Vorder- und Hinterteilen, die das Felgenbett bilden und beidseitig in das sogenannte Felgenhorn auslaufen, an dem die Seitenflanken der schlauchlosen Reifen dichtend anliegen.

Derartige Feigen sind z.B. aus dem DE-U-8 025 900 bekannt geworden.

Der Vorteil der Verwendung von Stahl gegenüber Leichtmetallen, wie Aluminiumlegierungen, liegt dabei in folgendem. Leichtmetallteile müssen nach dem Gießen spanabhebend verformt, d.h. geglättet werden. Da sie korrosiv sind, müssen sie zusätzlich beschichtet werden, was eine zusätzliche Vorbehandlung voraussetzt. Demgegenüber können die hier benötigten Stahlteile in einem Arbeitsgang, z.B. durch Tiefziehen hergestellt werden.

Stahl weist jedoch gegenüber den zur Felgenherstellung verwendeten Leichtmetallen den Nachteil höherer Verformbarkeit (Duktilität) auf, weswegen diese entweder stärkere Querschnitte und damit unvertretbar höhere Gewichte aufweisen mußten, bzw. es sind Vorder- und Hinterteil zusätzlich miteinander zu verweißen, wodurch jedoch bei den zum vorliegenden Verwendungszweck besonders infragekommenden rostfreien austenitischen (Edel)-Stählen die durch die Verformungsvorgänge bekanntermaßen bewirkten Zugfestigkeitssteigerungen weitgehend wieder aufgehoben werden.

Aus diesen Gründen ist es bisher nicht gelungen, mehrteilige Kraftfahrzeugfelgen aus Edelstahl in Leichtbauweise herzustellen, wofür aber wegen des ansprechenden Äußeren, der geringeren Herstellkosten und der geringen Anfälligkeit gegen Oxidation und Korrosion ein großer Bedarf besteht.

Ein weiteres gravierendes Problem besteht darin, daß wegen der Elastizität des Stahles eine sichere Abdichtung bei schlauchlosen Reifen bisher nicht gelungen ist. Dies liegt u.a. daran, daß sich durch das Bewegen der miteinander zu verbindenden Vorder- und Hinterteile ständige Lastwechsel und Reibungen ergeben, die Abrieb erzeugen und zur Dichtung verwendete Massen oder O-Ringe schwächen.

Aus der US-A-4 466 670 ist eine dreiteilige Kraftfahrzeugfelge bekannt geworden, bei der das Vorderteil eine zum Felgeninneren gerichtete Ausbeulung besitzen kann. Diese liegt auf dem Feigen-Hinterteil auf und bildet mit ihm eine V-förmige Kehle, in die Dichtungsmaterial eingefüllt ist.

Eine solche Lösung mag bei sehr starrem Felgenmaterial möglich sein, bei den wesentlich elastischeren Stahlfelgen scheidet sie aus. Die Kehle würde sich im Fahrbetrieb ständig öffnen und schließen, was bei den darüber hinaus auftretenden Temperaturen von bis zu weit über 100°C zu baldiger Undichtigkeit führen würde. Zudem würden Vorder- und Hinterteil aneinander ständig scheuern, Abrieb erzeugen und die Struktur schwächen, was im übrigen auch bei Verwendung von normalem Leichtmetall zu erwarten ist, weshalb diese Lösung auch keinen Eingang in die Praxis gefunden hat.

Die vorliegende Erfindung hat sich daher die Aufgabe gestellt, eine Lösung für das vorgenannte Problem zu schaffen, nämlich Stahlfelgen zur Verfügung zu stellen, die bei geringem Gewicht die bei Leichtmetallfelgen bekannten mechanischen Eigenschaften besitzen bzw. übertreffen und die bezüglich ihrer Oberflächeneigenschaften wesentlich höherwertig sind.

Die Lösung dieser Aufgabe gelingt bei einer Kraftfahrzeugfelge der eingangs geschilderten Art unter Zuhilfenahme der folgenden Merkmale

a) Vorderteil und Hinterteil sind im Querschnitt im Anschluß an den Stoß unter Bildung einer Tasche mit der nach innen gerichteten Ausbeulung zur Aufnahme eines O-Ringes V-förmig aufgeweitet,

b) das Mittelteil weist oberhalb der Verschraubung eine Abschrägung auf, an der die zur Bildung der V-förmigen Aufweitung vorgesehene Abknickung des Hinterteils anliegt,

c) zwischen Ausbeulung und Hinterteil ist ein Spalt belassen.

Es hat sich herausgestellt, daß einmal die mechanische Belastbarkeit eines derartigen Felgenaufbaus im Dauerversuch (1000 km Laufstrecke bei einer Belastung von 2000 kg) bei niedrigem Gesamtgewicht überraschend hoch ist, es sind keine durch Verformung erzeugten Schäden aufgetreten. Zum anderen hat sich die Dichtung als dauerhaft druckfest erwiesen.

Durch die V-förmige Ausbildung der Aufweitung wird der dichtende O-Ring mit zunehmendem Luftdruck in einen engeren Querschnitt gedrückt und so die Dichtigkeit gesteigert. Dabei überragt vorzugsweise die Ausbeulung den V-Schenkel des Hinterteils nach innen bis in einen ersten Bereich von dessen Streckung zum Flügelhorn hin.

Die erfindungsgemäße Lösung gewährleistet trotz einer Leichtbauweise, d.h. bei dünnen Wandstärken eine ausgesprochen formstabile Ausbildung des O-Ring-Bettes, da die unvermeidbaren Bewegungen des gewählten elastischen Materials in Bezug auf das Vorderteil von der Ausbeulung aufgefangen, wohingegen die Schwingungen des Hinterteils lediglich bis zur oberen Anlagelinie an der Abknickung laufen. Der O-Ring bleibt somit von der beim Abrollen der Felge auftretenden Verformungsarbeit unbeeinflußt.

2

Die Breite des Spalts ist dabei so bemessen, daß dieser bei normaler Belastung offen bleibt und sich erst bei gegebenenfalls auftretenden hohen Stößen schließt, um das O-Ring-Bett auch hierbei vor Verformung zu schützen.

Darüber hinaus bietet der O-Ring die wesentliche Möglichkeit diesen für eine Vorspannung zu verwenden, und die Teile gegeneinander statisch so abzustützen, daß ein weitgehend stabiler Abstand der Teilbereiche voneinander gewährleistet ist. Zum Beispiel können hier Gummiringe mit Shorehärten von 72 eingesetzt werden. Mit Dichtungsmassen ist eine solche Lösung nicht möglich.

Um der Verschraubung eine diese sichernde Vorspannung mitzuteilen, wird weiterhin vorgeschlagen, Vorderteil und/oder Hinterteil im Bereich des Stoßes leicht konkav oder konvex auszubilden. Durch Anziehen der Verschraubung wird der Stoß unter Spannung glattgezogen. Es entsteht so neben der Sicherung der Verschraubung eine weitere Vorspannung, die eine Federungsbegrenzung bewirkt. Zusätzlich können natürlich selbsthemmende Gewinde eingesetzt werden.

Eine zusätzliche Festigkeitssteigerung wird durch eine besondere Formgebung des Hinterteils erreicht. Dieses weist dazu in an sich bekannter Weise im Querschnitt eine Stufe in der vorerwähnten, an das V-Profil anschließenden Streckung auf, wobei diese Stufe als Übergang leicht schräg ansteigend ausgebildet ist.

In weiterer Ausgestaltung der Erfindung ist an das Mittelteil ein rund umlaufender Tragkragen angeformt.

Dieser Tragkragen kann im Bereich der ersten Streckung enden, er kann jedoch vorzugsweise in den Bereich der Stufe hineinragen, bzw. sich über dessen ganze Länge erstrecken. Das zusätzliche Gewicht des Tragkragens wird ausgeglichen oder gar mehr als ausgegelichen durch die Tatsache, daß in diesem Falle das Hinterteil erheblich leichter gebaut sein kann.

Auf den Tragkragen, bzw. zwischen Tragkragen und Unterseite des Hinterteils können Stützelemente aus elastischem Material angeordnet werden, die beim Zusammenschrauben der Teile in Preßsitz gebracht werden.

Diese Stützelemente können ein oder mehrere Gummiringe höherer Shorehärte sein, grundsätzlich ist es jedoch auch möglich, Bereiche überdeckende oder vollflächige Einlagen aus Gummi oder Kunststoff (Polyamid, Polyurethan - auch geschäumt - Siliconwerkstoffe) zuwischen den Flächen anzuordnen.

Über den Tragkragen können wesentliche Anteile der auftretenden Biegeelemente abgefangen werden, zusätzlich ergibt sich durch die Verwendung der eleastischen Einlägen eine Dämpfung von Abrollschwingungen, was zu höherem Fahrkomfort und zu geringerer Geräuschbelastung führt.

Mit der erfindungsgemäßen Formgebung des Felgenbettes wird erstmals eine hohen Sicherheitsansprücen gerecht werdende Verwendung von rostfreien austenitischen Stählen, z.B. der Werkstoffnummern 1.4301 oder 1.4306 N möglich.

Um die Lebensdauer des das Felgenbett abdichtenden O-Ringes zu erhöhen, wird vorgeschlagen, diesen mit einer Siliconkonservierung zu versehen.

Da das erfindungsgemäße Felgenbett, wie erwähnt, aus relativ dünnen Blechen hergestellt werden kann, wird letztlich vorgeschlagen, die Ventilbohrung (am Vorderteil) innen zu walzen oder dieses durch Stanzverformung unter Bildung eines Rundkragens herzustellen, da durch normales Bohren hergestellte Öffnungen wegen der dünnen Querschnitte einer Rißbildung unterliegen können.

Es sei abschließend angemerkt, daß sowohl das Felgenbett, als auch das Mittelteil mit Vorderteil aus Stahl oder gleichwertigen Legierungen hergestellt sein können. Es ist jedoch auch im Sinne der vorliegenden Erfindung möglich, für das Mittelteil andere Werkstoffe zu verwenden.

Letztlich wird noch vorgeschlagen, die Ausbeulung über die V-förmige Aufweitung hinaus zu erstrecken, was eine weitere Erhöhung der angestrebten Formstabilität mit sich bringt.

Anhand der beiliegenden Figuren wird die vorliegende Erfindung näher erläutert:

Fig. 1 zeigt eine Ausführung mit Tragkragen,

Fig. 2 zeigt eine Ausführung ohne Tragkragen.

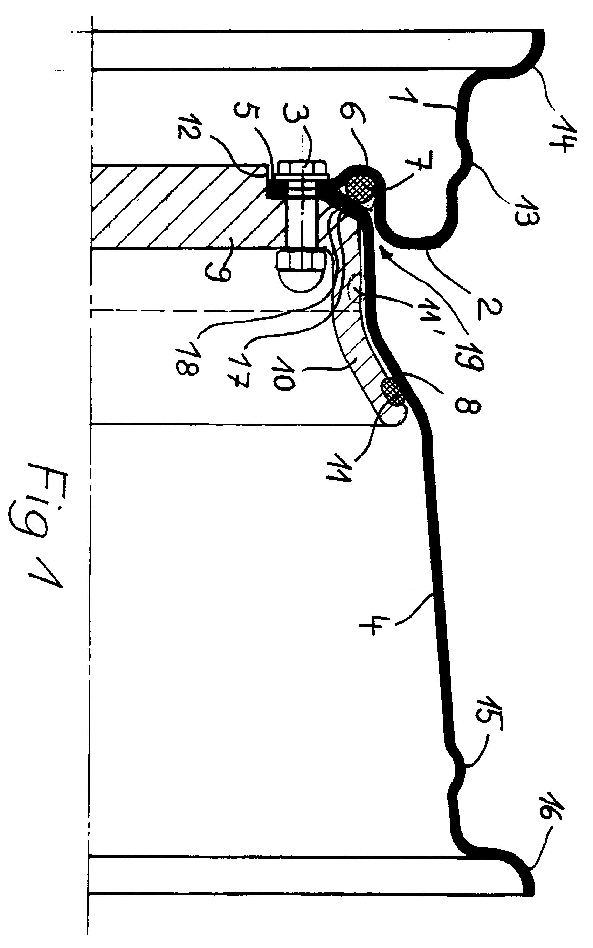

Fig. 1 In der Darstellung ist ein oberer Querschnittsausschnitt einer erfindungsgemäßen Felge gezeigt. Dabei trägt das Mittelteil 9 das (nicht dargestellte) Radlager. In einer Stufe 12 befinden sich als Stoß 5 die unteren Profilabschnitte der ein Felgenbett bildenden Einzelteile Vorderteil 1 und Hinterteil 4. Diese sind mit Hilfe der in einem Lochkreis liegenden Verschraubung 3 am Mittelteil 9 befestigt, wobei Mittelteil 9 und Vorderteil 1 das Hinterteil 4 einschließen. Durch eine besondere Formgebung des Stoßes, wie konkave oder konvexe Ausbildung, kann die Verschraubung durch Spannung gesichert sein.

Nach oben hin erweitern sich die an den Stoß 5 anschließenden Bereiche V-förmig, wobei das Vorderteil 1 zu einer Tasche 6 ausgeformt ist, in der ein O-Ring 7 aus Dichtmaterial wie z.B. Gummi liegt, der nach unten an die Flanken der V-förmigen Aufweitung anliegt. Dieser O-Ring kann mit z.B. Silicon konserviert sein. Die aufgeweitete Flanke des Hinterteils 4 liegt als Abknickung 17 an einer Abschrägung 18 des Mittelteils 9 bzw. an dessen winkelförmigem oder ausgerundetem Übergang zur Waagerechten an.

Das Vorderteil ist über die Tasche 6 hinaus über das Hinterteil 4, mindestens aber vorzugsweise über die V-förmige Aufweitung hinausragend unter Bildung der Ausbeulung 2 gekröpft. Im daran anschließenden etwa waagerechten Teil befindet sich eine Sicke, am äußeren Rand ist ein Felgenhorn 14 dargestellt. Das Hinterteil 4 weist einen hier horizontal dargestellten Bereich auf, an den die schräg verlaufende Stufe 8 anschließt. An diese ist ein leicht ansteigender Bereich mit einer weiteren Sicke 15 und dem inneren Felgenhorn 16 angeformt. Dabei ist zwischen der Ausbeulung 2 und dem Hinterteil 4 ein Spalt 19 belassen, der bei Normalbelastung offenbleibt.

Unterhalb des horizontalen Bereiches und der Stufe 8 ist der Tragkragen 10 dargestellt, der hier beide Teile stützt. Analoge Ausführungen, wie etwa eine Verkürzung des Tragkragens 10 (gestrichelte Linie), sind von der vorliegenden Erfindung ebenfalls umfaßt. Zwischen Tragkragen 10 und Hinterteil 4 sind Abstützelemente 11, 11' dargestellt, diese können gegebenenfalls auch flächig ausgebildet sein.

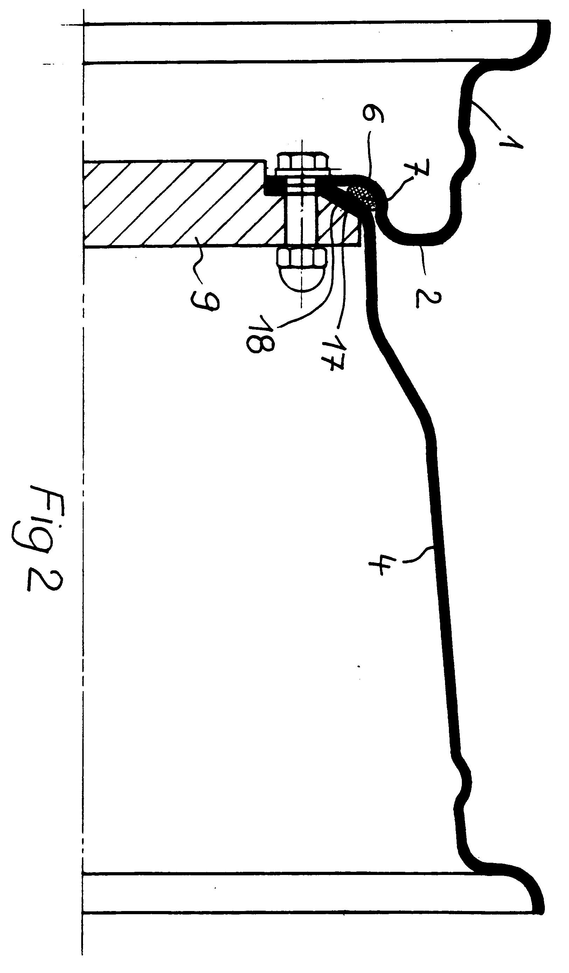

In Fig. 2 ist eine Ausführung ohne Tragkragen dargestellt. Hier endet das Mittelteil 9 radial unter dem Hinterteil 4.

In dieser Ausführungsform ist eine Tasche 6 gezeigt, die sich aus einer Verlängerung der Stoßflanke des Vorderteils 1 ergibt.

An die Tasche schließt S-förmig die Ausbeulung 2 an, der V-förmige Spalt zur Aufnahme des O-Ringes 7 wird hier allein durch die Abknickung 17 des an den Stoß anschließenden Bereiches 17 des Hinterteils 4 gebildet, der wie in Fig. 1 an einer Abschrägung 18 des Mittelteils 9 anliegt.

**Patentansprüche**

1. Mehrteilige Kraftfahrzeugfelge in Leichtbauweise, bestehend aus einem Mittelteil (9) sowie das Felgenbett bildendem Vorder- (1) und Hinterteil (4) mit einer Abdichtung (7), wobei Vorder- und Hinterteil radial nach innen gerichtete, einander berührende Anlageflächen zur Bildung eines radialen Stoßes (5) aufweisen und mit dem Mittelteil (9) verschraubt sind, alle drei Teile aus Stahl bestehen und wobei das Vorderteil (1) eine zum Felgeninneren gerichtete Ausbeulung (2) aufweist, **gekennzeichnet durch** die folgenden Merkmale

a) Vorderteil (1) und Hinterteil (4) sind im Querschnitt im Anschluß an den Stoß (5) unter Bildung einer Tasche (6) mit der nach innen gerichteten Ausbeulung (2) zur Aufnahme eines O-Ringes (7) V-förmig aufgeweitet,

b) das Mittelteil (9) weist oberhalb der Verschraubung (3) eine Abschrägung (18) auf, an der die zur Bildung der V-förmigen Aufweitung vorgesehene Abknickung (17) des Hinterteiles (4) anliegt,

c) zwischen Ausbeulung (2) und Hinterteil (4) ist ein Spalt (19) belassen.

2. Stahlfelge nach Anspruch 1, **dadurch gekennzeichnet**, daß Vorderteil (1) und/oder Hinterteil (4) im Bereich des Stoßes (5) leicht konkav oder konvex geformt sind.

3. Stahlfelge nach mindestens einem der Ansprüche 1 - 2 **dadurch gekennzeichnet**, daß an das Mittelteil (9) ein Tragkragen (10) zur Stützung des Hinterteils (4) angeformt ist.

4. Stahlfelge nach Anspruch 1 - 3, **dadurch gekennzeichnet**, daß zwischen Tragkragen (10) und dem Hinterteil (4) mindestens ein elastisches Abstützelement (11) angeordnet ist.

5. Stahlfelge nach mindestens einem der Ansprüche 1 - 4, **dadurch gekennzeichnet**, daß Vorder- (1) und Hinterteil (4) aus rostfreiem austenitischem Stahl, wie z. b. 1.4301 oder 1.4306 N gefertigt sind.

6. Stahlfelge nach mindestens einem der Ansprüche 1 - 5, **dadurch gekennzeichnet**, daß der O-Ring (7) mit einer Silicon-Konservierung versehen ist.

7. Stahlfelge nach mindestens einem der Ansprüche 1 - 6, **dadurch gekennzeichnet**, daß die Ventilbohrung innengewalzt oder durch Stanzverformung unter Bildung eines Randkragens hergestellt ist.

8. Stahlfelge nach mindestens einem der Ansprüche 1 - 7, **dadurch gekennzeichnet**, daß die Ausbeulung (2) die V-förmige Aufweitung überdeckt.

**Claims**

1. Multi-part motor vehicle wheel trim of light-weight construction, consisting of a central part (9), as well as front (1) and rear parts (4) forming the rim well with a seal (7), whereby front and rear parts have radially inwardly pointing, mutually touching contact surfaces for the formation of a radial joint (5) and are bolted with the central part (9), all three parts consisting of steel, and whereby the front part (1) has a bulge (2) pointing towards the inside of the rim, **characterised** by the following features

a) front part (1) and rear part (4) are widened V-shaped in cross-section in the connection to the joint (5) with formation of a pocket (6) with the inwardly directed bulge (2) for the reception of an O-ring (7),

b) the central part (9) has, above the bolting (3), a bevel (18) against which lies the kinking (17) of the rear part (4) provided for the formation of the V-shaped widening,

c) a gap (19) is left between bulge (2) and rear part (4).

2. Steel wheel trim according to claim 1, **characterised in that** front part (1) and/or rear part (4) are, in the region of the joint (5), slightly concave or convex shaped.

3. Steel wheel trim according to at least one of claims 1 - 2, **characterised in that** a supporting collar (10) for the supporting of the rear part is formed on the central part (9).

4. Steel wheel trim according to claims 1 - 3, **characterised in that** at least one elastic support element (11) is arranged between supporting collar (10) and the rear part (4).

5. Steel wheel trim according to at least one of claims 1 - 4, **characterised in that** front (1) and rear part (4) are made of stainless austenitic steel, such as e.g. 1.4301 or 1.4306 N.

6. Steel wheel trim according to at least one of claims 1 - 5, **characterised in that** the O-ring (7) is provided with a silicone preservative.

7. Steel wheel trim according to at least one of claims 1 - 6, **characterised in that** the valve bore is internally milled or is produced by punch forming with formation of an edge collar.

8. Steel wheel trim according to at least one of claims 1 - 7, **characterised in that** the bulge (2) overlaps the V-shaped widening.


## Revendications

1. Jante de véhicule automobile, en plusieurs parties et d'un genre de construction légère, constituée par une partie médiane (9) ainsi que par une partie antérieure (1) qui forme la base de jante et par une partie postérieure (4) qui comporte un joint d'étanchéité (7), dans laquelle la partie antérieure et la partie postérieure présentent des surfaces d'appui, pour la formation d'une jointure radiale (5), dirigées radialement vers l'intérieur et en contact mutuel et sont vissées à la partie médiane (9), toutes les trois parties étant constituées en acier, et dans laquelle la partie antérieure (1) présente un bossage (2) dirigé vers l'intérieur de la jante, **caractérisée** par les particularités suivantes :

a) les partie antérieure (1) et partie postérieure (2) sont évasées, en section transversale, en forme de V à la suite de la jointure (5) en formant une poche (6), avec le bossage (2) dirigé vers l'intérieur, pour la réception d'un joint torique (7),

b) la partie médiane (9) présente, au-dessus du boulonnage (3), un chanfrein (18) sur lequel est appuyé le pli (17) de la partie postérieure (4) prévu pour la formation de l'évasement en forme de V,

c) un interstice (19) est maintenu entre bossage (2) et partie postérieure (4).

2. Jante en acier suivant la revendication 1, **caractérisée en ce que** la partie antérieure (1) et/ou la partie postérieure (4) sont formées de façon légèrement concave ou convexe dans la zone de la jointure (5).

3. Jante en acier suivant au moins l'une des revendications 1 et 2, **caractérisée en ce qu'**un collet porteur (10) pour l'appui de la partie postérieure (4) est formé sur la partie médiane (9).

4. Jante en acier suivant l'une quelconque des revendications 1 à 3, **caractérisée en ce qu'**au moins un élément de soutien élastique (11) est agencé entre collet porteur (10) et partie postérieure (4).

5. Jante en acier suivant au moins l'une quelconque des revendications 1 à 4, **caractérisée en ce que** les parties antérieure (1) et postérieure (4) sont fabriquées en un acier austénitique inoxydable comme par exemple du 1.4301 ou 1.4306N.

6. Jante en acier suivant au moins l'une quelconque des revendications 1 à 5, **caractérisée en ce que** le joint torique (7) est pourvu d'un traitement de conservation au silicone.

7. Jante en acier suivant au moins l'une des revendications 1 à 6, **caractérisée en ce que** le perçage de soupape est réalisé de façon déformée vers l'intérieur, ou par formage par poinçonnage en formant un collet de bord.

8. Jante en acier suivant au moins l'une des revendications 1 à 7, **caractérisée en ce que** le bossage 2 recouvre l'évasement en forme de V.

Fig 1

Fig 2